Europäisches Patentamt

European Patent Office

Office européen des brevets

(19)

(11)  **EP 0 802 606 B1**

(12)  **FASCICULE DE BREVET EUROPEEN**

(45) Date de publication et mention
de la délivrance du brevet:
**27.03.2002   Bulletin 2002/13**

(51) Int Cl.⁷: **H02J 7/24**, H02P 9/30

(21) Numéro de dépôt: **97105832.6**

(22) Date de dépôt: **09.04.1997**

(54) **Procédé de régulation du courant d'excitation d'un alternateur de véhicule automobile par traitement numérique et dispositif régulateur mettant en oeuvre un tel procédé**

Verfahren zur Steuerung des Erregungstroms eines Fahrzeuggenerators mit digitaler Verarbeitung und Steuerungsvorrichtung zur Durchführung dieses Verfahrens

Method to regulate the exciting current of an automotive vehicle generator using digital processing and regulator device for carrying out this method

(84) Etats contractants désignés:
**DE ES GB IT**

(30) Priorité:  **18.04.1996  FR 9604855**

(43) Date de publication de la demande:
**22.10.1997   Bulletin 1997/43**

(73) Titulaire: **VALEO EQUIPEMENTS ELECTRIQUES MOTEUR**
**94017 Creteil (FR)**

(72) Inventeurs:
 • **Rechdan, Raymond**
  **75016 Paris (FR)**
 • **Planchard, Bryan**
  **78112 Fourqueux (FR)**

(74) Mandataire: **Gamonal, Didier**
**Valeo Management Services**
**Propriété Industrielle**
**2, rue André Boulle,**
**B.P. 150**
**94004 Créteil (FR)**

(56) Documents cités:
 **EP-A- 0 481 862**          **US-A- 4 673 862**

 • **ELEKTRONIK, vol. 34, no. 24, novembre 1985, MUNCHEN DE, pages 91-94, XP002021911 DR.-ING. LUDWIG ABRAHAM: "Der Mikroprozessor in der Antriebstechnik"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de régulation du courant d'excitation d'un alternateur de véhicule automobile par traitement numérique et un dispositif régulateur mettant en oeuvre un tel procédé.

De manière connue, un alternateur est une machine électrique dans laquelle un courant alternatif est généré dans ses enroulements de stator sous l'effet d'un inducteur qui est parcouru par un courant d'excitation lorsque cet inducteur est mis en rotation. A la sortie des enroulements du stator, un pont de diode assure le redressement du courant alternatif de manière à délivrer à la batterie du véhicule une tension continue.

Cette tension doit être régulée de manière à rester constante quelle que soit la vitesse de rotation de l'alternateur et quelle que soit la charge à laquelle est soumise la batterie. La tension de sortie de l'alternateur présente ainsi une ondulation de régulation à l'image du courant d'excitation, cette ondulation étant de période $T$, comprenant une première alternance $T_1$ pendant laquelle la tension de la batterie du véhicule est appliquée à l'inducteur ce qui permet d'augmenter le courant circulant dans l'inducteur, et une deuxième alternance $T_2$ pendant laquelle la tension de la batterie n'est pas appliquée à l'inducteur ce qui fait diminuer le courant dans l'inducteur.

Le rapport $T_1/(T_1+T_2)$ est appelé rapport cyclique.

On a déjà proposé d'effectuer la régulation à l'aide de techniques numériques. Le brevet européen n° EP 0 481 862 décrit notamment un procédé de régulation par traitement numérique, selon lequel on effectue une mesure de la tension de sortie de l'alternateur à chaque période $T$, par échantillonnage, en détectant, dans chaque période $T$, quelle est la plus longue des alternances $T_1$ ou $T_2$, et en effectuant l'échantillonnage pendant un temps $T_e$ placé au milieu de l'alternance la plus longue. La valeur numérique de la tension mesurée est ensuite comparée à une référence et on déduit de cette comparaison la valeur des alternances $T_1$ et $T_2$ de la période suivante.

Ce procédé de régulation, bien que satisfaisant car il permet de s'affranchir des variations dues à l'ondulation, en centrant la mesure de la tension à réguler sur l'alternance la plus longue, est relativement compliqué à mettre en oeuvre. Il faut en effet, d'une part détecter l'alternance la plus longue, et d'autre part centrer le temps d'échantillonnage en son milieu. On a en outre pu constater que des défauts de régulation apparaissaient lorsqu'on passait d'un rapport cyclique supérieur à 50% (alternance $T_1$ la plus longue) à un rapport cyclique inférieur à 50% (alternance $T_2$ la plus longue).

La présente invention a pour but de résoudre ces problèmes et propose à cet effet un procédé de régulation du courant d'excitation d'un inducteur d'alternateur pour véhicule automobile, ledit alternateur comprenant notamment un pont redresseur délivrant une tension redressée à réguler, la tension redressée présentant une ondulation comportant une composante de fréquence basse provoquée par le signal d'excitation, variable en amplitude, ladite tension redressée étant ainsi une tension périodique dont chaque période $T$ se décompose en une première alternance $T_1$ durant laquelle la tension de la batterie du véhicule est appliquée à l'inducteur et une deuxième alternance $T_2$ pendant laquelle la tension de la batterie n'est pas appliquée à l'inducteur, consistant:

- à déclencher une mesure de la tension redressée au cours de chaque période $T$,
- à réaliser la mesure pendant une durée $T_e$ prédéterminée, par échantillonnage, c'est à dire en effectuant des mesures successives et rapprochées,
- à comparer la valeur mesurée de la tension redressée à une valeur de référence calculée,
- à déduire de cette comparaison la durée de la première alternance $T_1$ de la période $T$ suivante,

caractérisé en ce que la mesure par échantillonnage de durée $T_e$ prend fin, à chaque période $T$, à un instant $T - \varepsilon$, $\varepsilon$ étant un temps très court par rapport à la durée de la période $T$.

Selon un aspect préféré de l'invention, la durée d'échantillonnage $T_e$ est sensiblement égale à la moitié de la durée de la période $T$.

Ainsi, en effectuant une mesure sur une demi-période et en plaçant cette mesure toujours à la fin de la période, la valeur mesurée est représentative de la tension de sortie de l'alternateur et le procédé de mesure est simplifié par rapport à ceux de l'art antérieur.

Selon d'autres caractéristiques de l'invention prises indépendamment ou en combinaison,

- la comparaison de la valeur mesurée de la tension redressée avec une valeur de référence calculée est effectuée pendant le temps $\varepsilon$ compris entre la fin de la mesure par échantillonnage de durée $T_e$ et la fin de la période $T$;
- le calcul de la durée de la première alternance $T_1$ de la période $T$ suivante est effectué pendant le temps $\varepsilon$ compris entre la fin de la mesure par échantillonnage de durée $T_e$ et la fin de la période $T$;
- le temps $\varepsilon$ est sensiblement égal au temps minimum nécessaire pour effectuer: la comparaison entre la valeur mesurée de la tension redressée et la valeur de référence calculée, et le calcul de la durée de la première alternance $T_1$ de la période $T$ suivante;
- la valeur de référence est calculée en fonction d'au moins un paramètre lié à l'alternateur et/ou à la batterie du véhicule;
- la valeur de référence est calculée en fonction de la température de l'alternateur et/ou de la batterie du véhicule;
- le calcul de la valeur de référence est effectué pendant un temps compris entre le début de la période T et le début de la mesure par échantillonnage de durée $T_e$.

Selon un autre aspect preféré de l'invention, le procédé de régulation consiste:

- à effectuer, au cours de chaque période T, une mesure de température,
- à en déduire une valeur de référence, fonction de la température mesurée, ladite valeur de référence étant ensuite comparée avec la valeur de la tension redressée mesurée.

Selon une autre caractéristique preferée de l'invention, la valeur de référence est calculée, à partir d'une valeur prédéterminée pour une température donnée, en appliquant à cette valeur prédéterminée un facteur correctif qui est une fonction de la température.

L'invention selon le revendication 11 s'applique également à un dispositif régulateur du courant d'excitation d'un alternateur mettant en oeuvre le procédé selon l'une quelconque des caractéristiques précédentes.

D'autres caractéristiques et avantages apparaîtront à la lecture de la description suivante en se référant aux dessins annexés parmi lesquels:

- la figure 1 est un schéma de principe d'un dispositif régulateur selon l'invention;
- la figure 2 représente des diagrammes temporels de plusieurs signaux illustrant le procédé de l'invention;
- les figures 3 et 4 sont des organigrammes montrant le fonctionnement de l'invention;
- la figure 5 est une courbe présentant la valeur de référence calculée en fonction de la température.

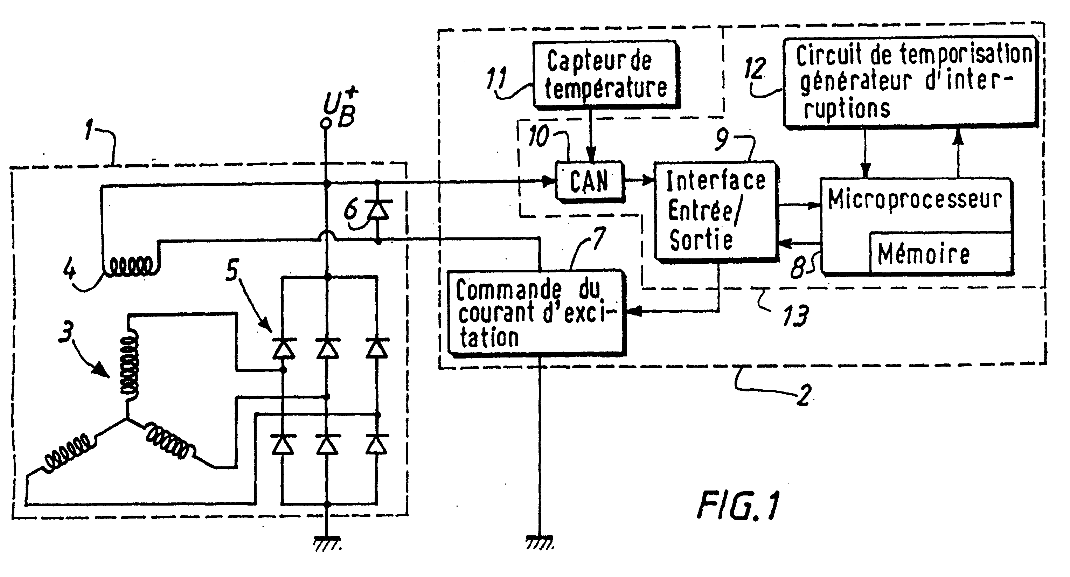

La figure 1 illustre un alternateur 1 comprenant des enroulements de stator 3 dans lesquels est généré, sous l'action d'un inducteur 4, une tension alternative. Un pont de diodes 5 est connecté à la sortie des enroulements pour délivrer une tension redressée $U_B^+$ appliquée à la batterie et au réseau de bord du véhicule.

Le courant d'excitation parcourant l'inducteur 4 est régulé par un dispositif régulateur 2. Celui-ci comprend un circuit de commande du courant d'excitation 7, constitué par exemple d'un transistor de puissance qui, lorsqu'il est passant, laisse passer un courant d'excitation et, lorsqu'il est bloqué, empêche l'inducteur d'être alimenté par la batterie du véhicule. Une diode 6 assure une recirculation du courant dans l'inducteur pendant les phases où l'inducteur n'est plus alimenté par la batterie.

Le dispositif régulateur 2 comprend en outre un microcontrôleur 13 comportant:

- un microprocesseur 8, muni d'une mémoire, qui effectue les calculs et traitements nécessaires à la régulation;
- une interface d'entrée et de sortie 9 du microprocesseur;
- un convertisseur analogique / numérique 10 qui transforme la tension $U_B^+$ de sortie de l'alternateur en une série d'octets et qui convertit la tension délivrée par le capteur de température 11, représentative de la température de l'alternateur ou de la batterie, en une valeur numérique;
- un circuit de temporisation 12 qui provoque des interruptions pour changer l'état d'excitation et qui se charge des données calculées par le microprocesseur 8.

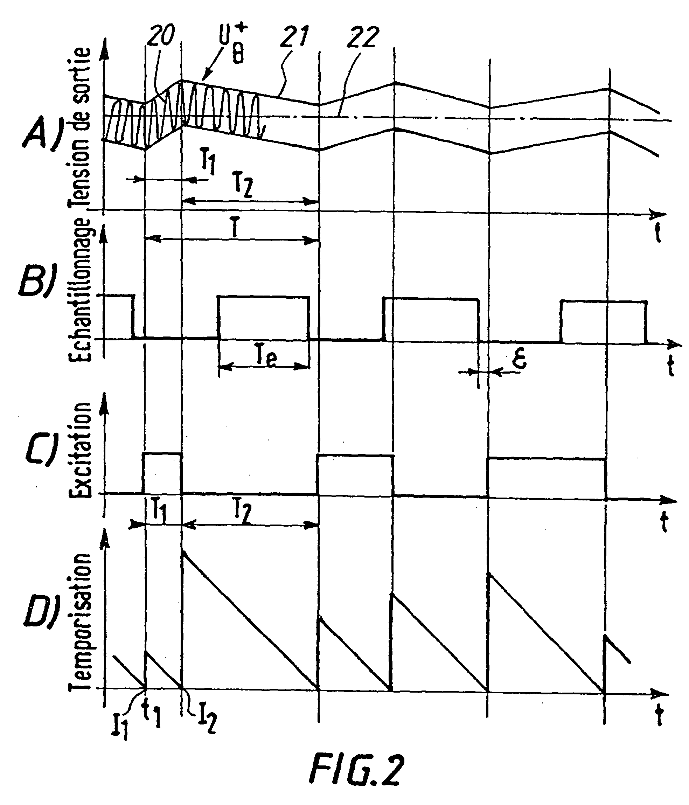

A la figure 2A, on a représenté la tension à réguler $U_B^+$ telle qu'elle apparaît en sortie de l'alternateur ou sur le réseau de bord du véhicule, le temps étant porté en abscisse et la tension en ordonnée.

Cette tension $U_B^+$ présente une ondulation 20 de fréquence élevée, qui est due en particulier au pont de diodes 5 assurant le redressement de $U_B^+$. A cette ondulation se superpose une ondulation 21, de fréquence beaucoup moins élevée, qui varie en amplitude en fonction des variations du courant d'excitation dans l'inducteur.

La valeur moyenne de la tension $U_B^+$ oscille ainsi autour d'une tension moyenne 22.

En liaison avec la figure 2C qui représente la tension d'excitation appliquée à l'inducteur en fonction du temps, l'ondulation 21 est de période T se décomposant en deux alternances $T_1$ et $T_2$.

Pendant l'alternance $T_1$, un créneau apparaît sur la figure 2C signifiant qu'une tension d'excitation est appliquée à l'inducteur 4, ce qui fait croître la tension $U_B^+$ comme on peut le voir sur la figure 2A.

Pendant l'alternance $T_2$, par contre, aucune tension d'excitation n'est appliquée à l'inducteur, ce qui se traduit par un niveau zéro sur la figure 2C et qui fait décroître la tension $U_B^+$ (figure 2A).

Le rapport cyclique $T_1/(T_1+T_2)$ peut en théorie varier de 0 à 100 % suivant les besoins des circuits utilisateurs et suivant l'état de charge de la batterie.

La figure 2B représente des créneaux $T_e$ qui correspondent à la durée pendant laquelle on effectue une mesure de la tension $U_B^+$, par échantillonnage, au cours de chaque période T.

Selon l'invention, cette mesure par échantillonnage d'une durée $T_e$ est placée à la fin de chaque période T, quel que soit le rapport cyclique, de façon qu'elle se termine à un temps ε, très court, avant la fin de la période T.

Dans un mode de réalisation préféré de l'invention, le créneau d'échantillonnage $T_e$ a une durée sensiblement égale à une demi-période T.

Par exemple, si la période T est de 16 millisecondes, la durée d'échantillonnage sera de 8 millisecondes et le temps ε sera inférieur à une milliseconde.

Ainsi, la mesure de la tension $U_B^+$ est fiable puisqu'elle dure une demi-période, et le fait qu'elle soit placée en fin de période T permet d'avoir un temps de réponse rapide du dispositif régulateur.

L'ensemble de ces opérations est effectué par un programme géré par le microcontrôleur 13.

Ainsi, la figure 2D montre qu'une interruption $I_1$, provoquée par le circuit de temporisation 12, déclenche l'apparition d'un créneau d'excitation (visible sur la figure 2C) qui dure pendant toute la durée $T_1$ chargée dans le circuit de temporisation.

Une fois cette durée écoulée, le circuit de temporisation provoque une interruption $I_2$ qui fait basculer l'excitation à zéro pendant toute la durée $T_2$.

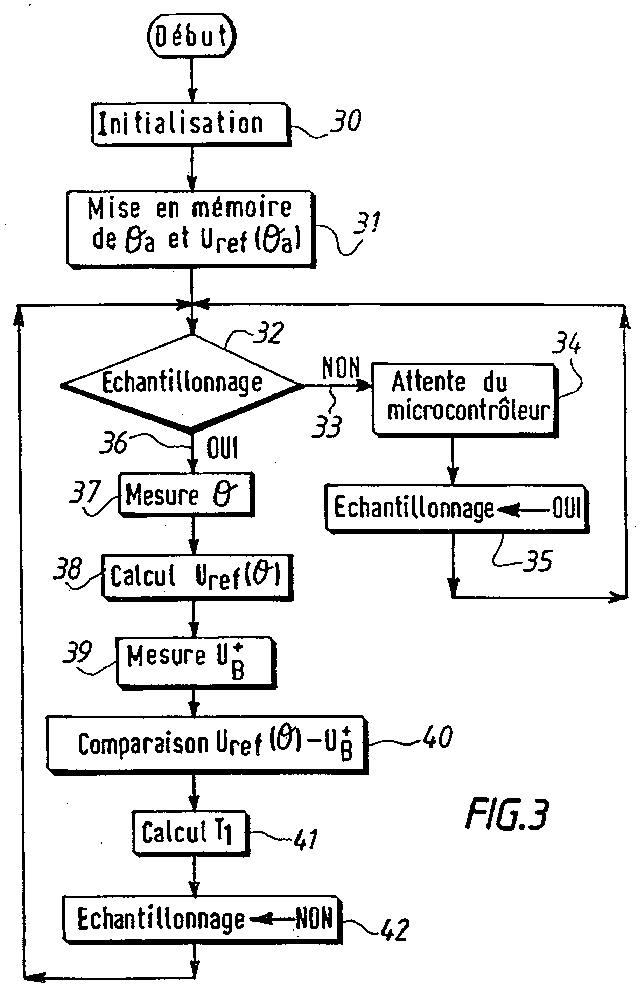

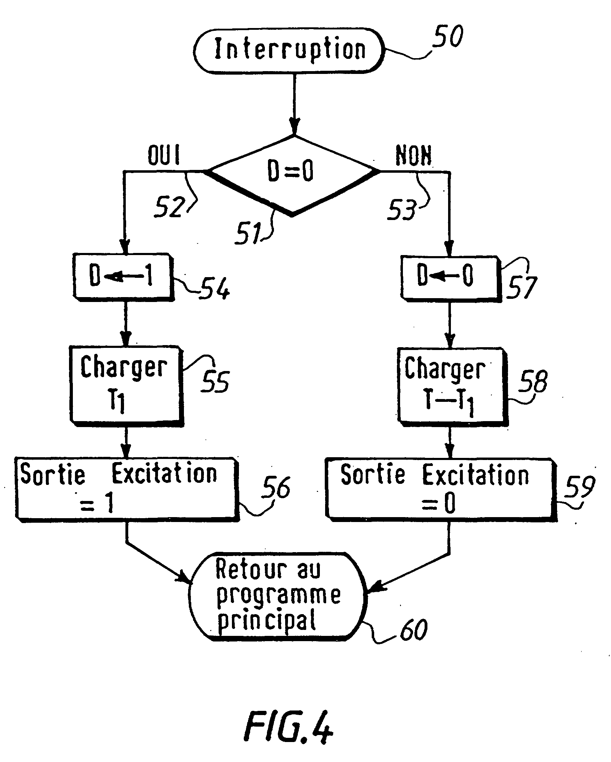

Dans la suite de la description, le fonctionnement du procédé de régulation de l'invention sera décrit en se reportant aux organigrammes des figures 3 et 4 qui montrent un exemple de mise en oeuvre dudit procédé.

La figure 3 représente le programme principal qui est effectué par le microcontrôleur 13 tandis que la figure 4 montre un programme d'interruption, effectué à chaque interruption générée par le circuit de temporisation 12, qui a une durée négligeable par rapport à celle des autres opérations effectuées par le programme principal.

Le programme commence par une initialisation 30 de tous les paramètres utilisés par le microcontrôleur 13 et par le circuit de temporisation 12 puis par une mémorisation 31 des valeurs prédéterminées de la température $\theta_a$ et de la tension correspondante $U_{ref}(\theta_a)$.

Pour décrire en détail ce programme, on suppose se trouver à l'instant $t_1$ au moment où l'interruption $I_1$ vient d'être provoquée déclenchant l'apparition d'un créneau $T_1$ d'excitation.

L'indicateur d'échantillonnage ayant été positionné sur Non lors de l'initialisation du programme, lorsque le test 32 est effectué, c'est sa sortie 33 qui est choisie. Le microcontrôleur attend donc en 34 que s'écoule une durée chargée préalablement en mémoire qui est inférieure à T - T/2 - $\varepsilon$. Puis l'indicateur d'échantillonnage est positionné sur Oui en 35.

Il est à noter que l'attente 34 du microcontrôleur peut être utilisée de manière plus profitable en effectuant des calculs ou des traitements complémentaires qui ne font pas l'objet de la présente invention.

Lors du nouveau test 32 de l'indicateur d'échantillonnage, c'est sa sortie 36 qui est choisie et les opérations suivantes sont alors effectuées:

- en 37, on effectue une mesure de la température $\theta$ en utilisant les informations délivrées par le capteur de température 11 au convertisseur analogique / numérique 10;

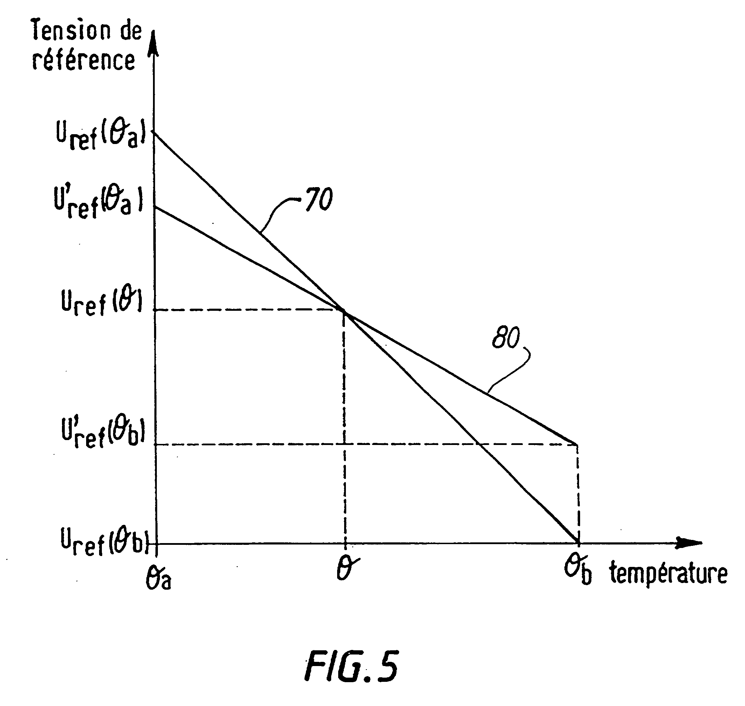

- en 38, on calcule la valeur de référence $U_{ref}(\theta)$ en fonction de la température $\theta$ qui a été mesurée; le procédé de calcul sera exposé plus loin en référence à la figure 5;

- lorsqu'une durée T - T/2 - $\varepsilon$ s'est écoulée depuis

l'instant $t_1$, la mesure de la tension $U_B^+$ est déclenchée en 39 et elle s'effectue pendant toute la durée $T_e$ par échantillonnage, c'est à dire qu'on effectue N mesures successives de $U_B^+$ qui sont additionnées et mémorisées par le microprocesseur 8 sous forme d'un nombre de deux octets;

- à la fin de la durée $T_e$, et pendant le temps $\varepsilon$, on compare en 40 la valeur de la tension $U_B^+$ mesurée à la valeur de référence $U_{ref}(\theta)$ calculée en 38 et on en déduit en 41 la nouvelle valeur de l'alternance $T_1$;

- en 42, on bascule l'indicateur d'échantillonnage sur Non et on retourne au test 32.

Le temps $\varepsilon$ correspond donc au temps minimum qui est nécessaire pour que le microprocesseur 8 effectue:

- la comparaison 40 entre la valeur mesurée de la tension $U_B^+$ et la valeur de référence $U_{ref}(\theta)$; et

- le calcul de la valeur de l'alternance $T_1$ de la période suivante.

Ce temps $\varepsilon$ dépend donc de la vitesse de calcul du microprocesseur 8.

En variante, les opérations de mesure de la température $\theta$ (étape 37) et de calcul de la valeur de référence $U_{ref}(\theta)$ (étape 38) peuvent être effectuées à l'étape 34.

En référence à la figure 4, nous allons maintenant décrire le programme d'interruptions qui est effectué par le microcontrôleur 13 à chaque fois qu'une interruption est déclenchée par le circuit de temporisation 12.

Lorsqu'une interruption 50 intervient, un test 51 est effectué pour connaître l'état d'un drapeau de contrôle d'interruptions D.

Si le drapeau D est à 0, alors la sortie 52 du test est choisie. A l'étape 54, on charge aussitôt la valeur 1 dans le drapeau D puis, en 55, on charge la valeur $T_1$ qui a été calculée par le programme principal dans le circuit de temporisation 12 pour que celui-ci provoque la prochaine interruption lorsque se sera écoulé le temps $T_1$.

En 56, le microcontrôleur 13 commande au circuit de contrôle du courant d'excitation 7 d'alimenter l'inducteur 4 avec un courant d'excitation, c'est à dire qu'on déclenche un créneau d'excitation d'une durée $T_1$, comme ceux visibles à la figure 2C, puis on retourne, en 60, au programme principal.

Lorsque la durée d'excitation $T_1$ est écoulée, le circuit de temporisation 12 provoque une nouvelle interruption et on effectue à nouveau le test 51. Comme le drapeau D est à 1, c'est alors la sortie 53 du test qui est choisie. En 57, on charge la valeur 0 dans le drapeau D, puis en 58, on charge la valeur T - $T_1$ en fonction de la valeur $T_1$ qui a été calculée par le programme principal, enfin en 59, on commande au circuit de contrôle du courant d'excitation 7 de cesser d'alimenter l'inducteur 4 pendant toute la durée $T - T_1$ et on retourne au programme principal en 60.

Lorsque la durée $T - T_1$ se sera écoulée, une nouvelle interruption sera déclenchée et comme le drapeau D est à 0, ce sont les étapes 51, 52 et 54 à 56 qui seront effectuées.

La figure 5 illustre de quelle manière est calculée la valeur de référence $U_{ref}(\theta)$, à partir d'une valeur de référence $U_{ref}(\theta_a)$ prédéterminée pour une température $\theta_a$ donnée.

A partir de cette valeur prédéterminée, on applique un facteur correctif $f(\theta)$ qui dépend de la température $\theta$ qui a été mesurée:

$$U_{ref}(\theta) = U_{ref}(\theta_a) - f(\theta).$$

A la figure 5, on a représenté deux exemples possibles de la fonction $-f(\theta)$ par les courbes 70 et 80.

Si par exemple f est une fonction linéaire croissante avec la température $\theta$, la représentation graphique de $-f(\theta)$ est une droite dont la pente est négative.

Dans l'exemple considéré, les courbes sont calculées entre $\theta_a = -30°C$ et $\theta_b = 140°C$. Dans la courbe 70, $U_{ref}(\theta_a) = 15,05$ Volts et $U_{ref}(\theta_b) = 13,35$ Volts ce qui permet d'obtenir une compensation thermique de -10 millivolts/°C tandis que dans la courbe 80, $U'_{ref}(\theta_a) = 14,725$ Volts et $U'_{ref}(\theta_b) = 14,13$ Volts ce qui permet d'obtenir une compensation thermique de -3,5 millivolts/°C.

Naturellement, on pourra utiliser d'autres formes de compensations thermiques, notamment la fonction f n'est pas forcément une fonction linéaire mais peut être quelconque.

De même, la valeur de référence de la tension pourra être calculée en fonction d'autres paramètres de l'alternateur comme sa vitesse ou la charge qui lui est appliquée.

## Revendications

**1.** Procédé de régulation du courant d'excitation d'un inducteur (4) d'alternateur pour véhicule automobile, ledit alternateur comprenant notamment un pont redresseur (5) délivrant une tension redressée ($U_B^+$) à réguler, la tension redressée ($U_B^+$) présentant une ondulation comportant une composante de fréquence basse provoquée par le signal d'excitation, variable en amplitude, ladite tension redressée étant ainsi une tension périodique dont chaque période T se décompose en une première alternance $T_1$ durant laquelle la tension de la batterie du véhicule est appliquée à l'inducteur et une deuxième alternance $T_2$ pendant laquelle la tension de la batterie n'est pas appliqué à l'inducteur, consistant:

- à déclencher une mesure de la tension redressée ($U_B^+$) au cours de chaque période T,
- à réaliser la mesure pendant une durée $T_e$ prédéterminée, par échantillonnage, c'est à dire en effectuant des mesures successives et rapprochées,
- à comparer la valeur mesurée de la tension redressée ($U_B^+$) à une valeur de référence calculée ($U_{ref}$),
- à déduire de cette comparaison la durée de la première alternance $T_1$ de la période T suivante,

    **caractérisé en ce que** la mesure par échantillonnage de durée $T_e$ prend fin, à chaque période T, à un instant $T - \varepsilon$, $\varepsilon$ étant un temps très court par rapport à la durée de la période T.

**2.** Procédé de régulation selon la revendication 1, **caractérisé en ce que** la durée d'échantillonnage $T_e$ est sensiblement égale à la moitié de la durée de la période T.

**3.** Procédé de régulation selon l'une des revendications 1 ou 2, **caractérisé en ce que** la comparaison de la valeur mesurée de la tension redressée ($U_B^+$) avec une valeur de référence calculée ($U_{ref}$) est effectuée pendant le temps $\varepsilon$ compris entre la fin de la mesure par échantillonnage de durée $T_e$ et la fin de la période T.

**4.** Procédé de régulation selon l'une des revendications 1 à 3, **caractérisé en ce que** le calcul de la durée de la première alternance $T_1$ de la période T suivante est effectué pendant le temps $\varepsilon$ compris entre la fin de la mesure par échantillonnage de durée $T_e$ et la fin de la période T.

**5.** Procédé de régulation selon l'une des revendications 3 ou 4, **caractérisé en ce que** le temps $\varepsilon$ est sensiblement égal au temps minimum nécessaire pour effectuer:

- la comparaison entre la valeur mesurée de la tension redressée ($U_B^+$) et la valeur de référence calculée ($U_{ref}$), et
- le calcul de la durée de la première alternance $T_1$ de la période T suivante.

**6.** Procédé de régulation selon l'une des revendications précédentes, **caractérisé en ce que** la valeur de référence ($U_{ref}$) est calculée en fonction d'au moins un paramètre lié à l'alternateur et/ou à la batterie du véhicule.

**7.** Procédé de régulation selon la revendication 6, **caractérisé en ce que** la valeur de référence ($U_{ref}$) est calculée en fonction de la température de l'alternateur et/ou de la batterie du véhicule.

8. Procédé de régulation selon l'une des revendications 6 ou 7, **caractérisé en ce que** le calcul de la valeur de référence ($U_{ref}$) est effectué pendant un temps compris entre le début de la période T et le début de la mesure par échantillonnage de durée $T_e$.

9. Procédé de régulation selon l'une des revendications 6 à 8, **caractérisé en ce qu'**il consiste:

   - à effectuer, au cours de chaque période T, une mesure de température ($\theta$),
   - à en déduire une valeur de référence ($U_{ref}(\theta)$, fonction de la température ($\theta$) mesurée, ladite valeur de référence étant ensuite comparée avec la valeur de la tension redressée ($U_B^+$) mesurée.

10. Procédé de régulation selon la revendication 9, **caractérisé en ce que** la valeur de référence ($U_{ref}(\theta)$) est calculée, à partir d'une valeur prédéterminée ($U_{ref}(\theta_a)$) pour une température ($\theta_a$) donnée, en appliquant à ladite valeur prédéterminée ($U_{ref}(\theta_a)$) un facteur correctif qui est une fonction de la température ($\theta$).

11. Dispositif régulateur du courant d'excitation d'un alternateur mettant en oeuvre le procédé selon l'une quelconque des revendications précédentes, comprenant:

   - des moyens pour déclencher une mesure de la tension redressée ($U_B^+$) au cours de chaque période,
   - des moyens pour réaliser la mesure à chaque periole T pendant une durée predeterminée, la mesure prenant fin à un sinstant T-$\varepsilon$, $\varepsilon$ étant un temps très court par rapport à la durée de la periode T,
   - des moyens pour commander le courant d'excitation en fonction de la mesure.

**Claims**

1. A method of regulating the excitation current for a field winding (4) in an alternator for a motor vehicle, the said alternator including, in particular, a rectifier bridge (5) for delivering a rectified voltage ($U_B^+$) to be regulated by the said method, the rectified voltage ($U_B^+$) having a waveform which includes a low frequency component produced by the excitation, which is of variable amplitude, the said rectified voltage being therefore a periodic voltage, whereof each time period T is divided into a first phase $T_1$ during which the voltage from the battery of the vehicle is applied to the field winding, and a second phase $T_2$ during which the voltage from the battery is not applied to the field winding, the method comprising:

   - starting to measure the rectified voltage ($U_B^+$) during each period T,

   - performing the measurement over a predetermined period $T_e$ by sampling, that is to say by carrying out successive measurements close together,

   - comparing the measured value of the rectified voltage ($U_B^+$) with a calculated reference value ($U_{ref}$),

   - deducing from that comparison the duration of the first phase $T_1$ of the next following period T,

   **characterised in that** the measurement by sampling over a period $T_e$ terminates, in each period T, at an instant T - $\varepsilon$, $\varepsilon$ being a period of time which is very short by comparison with the duration of the period T.

2. A method of regulation according to Claim 1, **characterised in that** the sampling period $T_e$ is substantially equal to one half of the duration of the period T.

3. A method of regulation according to Claim 1 or Claim 2, **characterised in that** the comparison of the measured value of the rectified voltage ($U_B^+$) with a calculated reference value ($U_{ref}$) is performed over the period $\varepsilon$ defined between the end of the sampling measurement of duration $T_e$ and the end of the period T.

4. A method of regulation according to one of Claims 1 to 3, **characterised in that** the calculation of the duration of the first phase $T_1$ in the next following period T is carried out during the period $\varepsilon$ defined between the end of the sampling measurement of duration $T_e$ and the end of the period T.

5. A method of regulation according to Claim 3 or Claim 4, **characterised in that** the period $\varepsilon$ is substantially equal to the minimum time necessary for carrying out:

   - the comparison between the measured value of the rectified voltage ($U_B^+$) and the calculated reference value ($U_{ref}$), and

   - the calculation of the duration of the said first phase $T_1$ of the next following period T.

6. A method of regulation according to one of the preceding Claims, **characterised in that** the reference value ($U_{ref}$) is calculated as a function of at least one parameter associated with the alternator and/or with the battery of the vehicle.

7.  A method of regulation according to Claim 6, **characterised in that** the reference value ($U_{ref}$) is calculated as a function of the temperature of the alternator and/or of the battery of the vehicle.

8.  A method of regulation according to Claim 6 or Claim 7, **characterised in that** the calculation of the reference value ($U_{ref}$) is carried out over a period between the start of the period T and the start of the sampling measurement of duration $T_e$.

9.  A method of regulation according to one of Claims 6 to 8, **characterised in that** it consists in :

    -   performing a measurement of temperature θ during each period T,

    -   deducing therefrom a reference value ($U_{ref}(\theta)$) as a function of the measured temperature (θ), the said reference value being then compared with the measured value of the rectified voltage ($U_B^+$).

10. A method of regulation according to Claim 9, **characterised in that** the reference value ($U_{ref}(\theta)$) is calculated from a predetermined value ($U_{ref}(\theta_a)$) for a given temperature ($\theta_a$), by applying to the said predetermined value ($U_{ref}(\theta_a)$) a correction factor which is a function of the temperature (θ).

11. A regulating device for regulating the excitation current in an alternator by the method according to any one of the preceding Claims, comprising:

    -   means for starting the measurement of the rectified voltage ($U_B^+$) in the course of each period,

    -   means for performing the measurement in each period T over a predetermined time, the measurement ending at an instant T - ε, ε being a time period which is very short as compared with the length of the period T,

    -   means for controlling the excitation current as a function of the measurement.

**Patentansprüche**

1.  Verfahren zur Regelung des Erregerstroms einer Erregerwicklung (4) eines Wechselstromgenerators für Kraftfahrzeuge, wobei der besagte Wechselstromgenerator insbesondere eine Gleichrichterbrücke (5) umfaßt, die eine zu regelnde gleichgerichtete Spannung ($U_B^+$) liefert, wobei die gleichgerichtete Spannung ($U_B^+$) eine in der Amplitude veränderliche Schwingung mit einer Niederfrequenzkomponente aufweist, die durch das Erregungssignal bedingt ist, wobei die besagte gleichgerichtete Spannung daher eine periodische Spannung ist, deren Periode T jeweils aus einer ersten Halbperiode $T_1$, während der die Spannung der Fahrzeugbatterie an die Erregerwicklung angelegt wird, und aus einer zweiten Halbperiode $T_2$ besteht, während der die Spannung der Batterie nicht an die Erregerwicklung angelegt wird, darin bestehend:

    -   eine Messung der gleichgerichteten Spannung ($U_B^+$) im Verlauf jeder Periode T zu veranlassen,
    -   die Messung während einer vorbestimmten Dauer $T_e$ durch Abtastung auszuführen, das heißt durch Ausführung aufeinanderfolgender und angenäherter Messungen,
    -   den gemessenen Wert der gleichgerichteten Spannung ($U_B^+$) mit einem berechneten Bezugswert ($U_{ref}$) zu vergleichen,
    -   aus diesem Vergleich die Dauer der ersten Halbperiode $T_1$ der folgenden Periode T abzuleiten,

    **dadurch gekennzeichnet, daß** die durch Abtastung vorgenommene Messung mit der Dauer $T_e$ in jeder Periode T zu einem Zeitpunkt T - ε endet, wobei ε eine sehr kurze Zeit im Verhältnis zur Dauer der Periode T ist.

2.  Regelungsverfahren nach Anspruch 1, **dadurch gekennzeichnet, daß** die Abtastdauer $T_e$ in etwa gleich der Hälfte der Dauer der Periode T ist.

3.  Regelungsverfahren nach einem der Ansprüche 1 oder 2, **dadurch gekennzeichnet, daß** der Vergleich des gemessenen Werts der gleichgerichteten Spannung ($U_B^+$) mit einem berechneten Bezugswert ($U_{ref}$) während der Zeit ε zwischen dem Ende der durch Abtastung vorgenommenen Messung mit der Dauer $T_e$ und dem Ende der Periode T erfolgt.

4.  Regelungsverfahren nach einem der Ansprüche 1 bis 3, **dadurch gekennzeichnet, daß** die Berechnung der Dauer der ersten Halbperiode $T_1$ der folgenden Periode T während der Zeit ε zwischen dem Ende der durch Abtastung vorgenommenen Messung mit der Dauer $T_e$ und dem Ende der Periode T erfolgt.

5.  Regelungsverfahren nach einem der Ansprüche 3 oder 4, **dadurch gekennzeichnet, daß** die Zeit ε in etwa gleich der erforderlichen Mindestzeit ist, um folgendes durchzuführen:

- den Vergleich zwischen dem gemessenen Wert der gleichgerichteten Spannung ($U_B^+$) und dem berechneten Bezugswert ($U_{ref}$) und
- die Berechnung der Dauer der ersten Halbperiode $T_1$ der folgenden Periode T.

6. Regelungsverfahren nach einem der vorangehenden Ansprüche, **dadurch gekennzeichnet, daß** der Bezugswert ($U_{ref}$) in Abhängigkeit von wenigstens einem Parameter berechnet wird, der mit dem Wechselstromgenerator und/oder mit der Batterie des Fahrzeugs zusammenhängt.

7. Regelungsverfahren nach Anspruch 6, **dadurch gekennzeichnet, daß** der Bezugswert ($U_{ref}$) in Abhängigkeit von der Temperatur des Wechselstromgenerators und/oder der Batterie des Fahrzeugs berechnet wird.

8. Regelungsverfahren nach einem der Ansprüche 6 oder 7, **dadurch gekennzeichnet, daß** die Berechnung des Bezugswerts ($U_{ref}$) während einer Zeit zwischen dem Beginn der Periode T und dem Beginn der durch Abtastung vorgenommenen Messung mit der Dauer $T_e$ erfolgt.

9. Regelungsverfahren nach einem der Ansprüche 6 bis 8, **dadurch gekennzeichnet, daß** es darin besteht:

- im Verlauf jeder Periode T eine Messung der Temperatur ($\theta$) durchzuführen,
- daraus einen Bezugswert ($U_{ref}(\theta)$) in Abhängigkeit von der gemessenen Temperatur ($\theta$) abzuleiten, wobei der besagte Bezugswert anschließend mit dem gemessenen Wert der gleichgerichteten Spannung ($U_B^+$) verglichen wird.

10. Regelungsverfahren nach Anspruch 9, **dadurch gekennzeichnet, daß** der Bezugswert ($U_{ref}(\theta)$) unter Zugrundelegung eines vorbestimmten Werts ($U_{ref}(\theta_a)$) für eine gegebene Temperatur ($\theta_a$) berechnet wird, wobei in bezug auf den besagten vorbestimmten Wert ($U_{ref}(\theta_a)$) ein Korrekturfaktor angewendet wird, der von der Temperatur ($\theta$) abhängig ist.

11. Reglervorrichtung zur Regelung des Erregerstroms eines Wechselstromgenerators, die das Verfahren nach einem der vorangehenden Ansprüche anwendet, umfassend:

- Mittel, um eine Messung der gleichgerichteten Spannung ($U_B^+$) im Verlauf jeder Periode auszulösen,
- Mittel, um die Messung in jeder Periode T während einer vorbestimmten Dauer auszuführen, wobei die Messung zu einem Zeitpunkt T - $\varepsilon$ auszuführen, wobei $\varepsilon$ eine sehr kurze Zeit im Vergleich zur Dauer der Periode T ist,
- Mittel, um den Erregerstrom in Abhängigkeit von der Messung zu steuern.

FIG.1

$U_B^+$

Capteur de température

Circuit de temporisation générateur d'inter- ruptions

CAN

Interface Entrée/ Sortie

Microprocesseur

Mémoire

Commande du courant d'exci- tation

EP 0 802 606 B1

6

FIG.2

Début

Initialisation — 30

Mise en mémoire de $\theta_a$ et $U_{ref}(\theta_a)$ — 31

— 32

Echantillonnage — NON → Attente du microcontrôleur — 34

33

36 — OUI

37 — Mesure $\theta$

Echantillonnage ← OUI — 35

38 — Calcul $U_{ref}(\theta)$

39 — Mesure $U_B^+$

Comparaison $U_{ref}(\theta) - U_B^+$ — 40

Calcul $T_1$ — 41

Echantillonnage ← NON — 42

FIG.3

FIG.4

FIG.5